# FASCICULE DE BREVET EUROPEEN

(11) **EP 2 942 240 B1**
(45) Date de publication et mention de la délivrance du brevet: **27.02.2019**
(21) Numéro de dépôt: 15163017.5
(22) Date de dépôt: 09.04.2015
(51) Int. Cl.: B60R 13/02

(54) **ELEMENT DE GARNITURE DE SEUIL DE PORTE D'UN VEHICULE AUTOMOBILE**
VERKLEIDUNGSELEMENT DER TÜRSCHWELLE EINES KRAFTFAHRZEUGS
GARNISH ELEMENT FOR A MOTOR VEHICLE DOOR THRESHOLD

(30) Priorité: 05.05.2014 FR 1454033
(43) Date de publication de la demande: 11.11.2015
(73) Titulaire: PSA Automobiles SA, 78300 Poissy (FR)
(72) Inventeur: Le Cohu, Stefan, 94400 Vitry sur Seine (FR)
(74) Mandataire: Fernandez, Francis Lionel

(56) Documents cités:
- EP-A1- 0 356 373
- EP-A1- 2 620 353
- WO-A1-2011/154667
- WO-A1-2013/175812
- US-A1- 2006 029 056
- US-B1- 6 193 306

## Description

L'invention a trait au domaine de l'habillage intérieur des véhicules automobiles et concerne plus particulièrement un élément de garniture de seuil de porte.

Pour des raisons notamment de légèreté, les garnitures de seuil de portes sont généralement fabriquées dans un matériau plastique.

Une garniture de seuil de porte est généralement fixée sur la tôle interne du longeron de bas de caisse du véhicule, un longeron comprenant une tôle interne (tournée vers l'intérieur du véhicule) et une tôle externe (tournée vers l'extérieur du véhicule), ces deux tôles étant assemblées l'une par rapport à l'autre par soudure le long de leurs feuillures supérieures et inférieures. Un joint de porte est positionné sur les feuillures supérieures pour permettre notamment d'insonoriser le véhicule et de garantir une étanchéité au niveau de la porte. La garniture de seuil de porte se présente généralement sous la forme d'une pièce longitudinale en U, de faible épaisseur, comprenant une âme et deux ailes. Afin d'obtenir un seuil de porte plan, l'âme de la garniture de seuil de porte est positionnée à fleur du joint de porte, la garniture de seuil de porte étant maintenue en position par rapport à la tôle interne du longeron, par différents éléments d'encliquetage faisant saillie de la garniture de seuil de porte. Une zone de vide, issue de l'agencement et de la forme de la garniture de seuil de porte, est présente entre l'âme et le longeron.

Une garniture de seuil de porte est soumise à différentes sollicitations.

Par exemple, les occupants pénétrant ou sortant du véhicule sont susceptibles de prendre appui sur la garniture de seuil de porte.

D'autre part, lorsque le véhicule possède un coffre de toit, l'utilisateur est amené, lors de la fixation, du remplissage ou du vidage de celui-ci, à prendre appui sur la garniture de seuil de porte dans le but d'élever son champ visuel et d'avoir un meilleur accès au coffre.

Ainsi, sous l'action de ces différentes sollicitations, en présence de la zone de vide, la garniture de seuil de porte se déforme, plus précisément l'âme s'enfonce verticalement en direction du longeron, cet enfoncement étant d'autant plus important que le matériau plastique, dans lequel est fabriquée la garniture de seuil de porte, est souple.

Les sollicitations répétées sur la garniture génèrent une fatigue du matériau se traduisant par une perte de rigidité et une perte de sa forme initiale, au détriment de sa fonction d'appui et de son aspect esthétique.

On connaît par WO2011154667 une garniture de longeron d'un véhicule automobile accueillant un seuil de porte, dans lequel le corps de la garniture comporte un logement ouvert vers le haut, s'étendant essentiellement le long de l'axe longitudinal de la garniture et étant obturé par ledit seuil de porte, choisi parmi plusieurs modèles avec des niveaux de finition et/ou des fonctionnalités différentes.

Un premier objectif est de proposer un élément de garniture de seuil de porte conservant sa forme extérieure lorsqu'il est sollicité extérieurement.

Un deuxième objectif est de proposer un élément de garniture de seuil de porte léger.

A cet effet, il est proposé, en premier lieu, un élément de garniture de seuil de porte d'un véhicule automobile destiné à être monté sur un longeron ayant une face selon la revendication 1.

Diverses caractéristiques supplémentaires peuvent être prévues, seules ou en combinaison :
- la garniture de pied milieu comprend une platine s'étendant dans le prolongement de la base depuis l'extrémité arrière, cette platine comprenant la face inférieure depuis laquelle le pion fait saillie ;
- la garniture de pied milieu comprend un épaulement à la jonction entre la base et la platine ;
- la platine est recouverte par une garniture de pied arrière ;
- la platine comprend une ouverture, apte à recevoir un élément d'encliquetage solidaire de la garniture de pied arrière, et un fût s'étendant depuis la face inférieure vers le longeron, apte à recevoir un élément de fixation pour solidariser la platine sur le longeron ;
- le pion est un tube ;
- le tube est de section sensiblement rectangulaire ;
- l'élément de garniture de seuil de porte est venu de matière avec la garniture de pied milieu.

Il est proposé, en deuxième lieu, un véhicule automobile équipé d'un tel élément de garniture de seuil de porte.

D'autres objets et avantages de l'invention apparaîtront à la lumière de la description d'un mode de réalisation, faite ci-après en référence aux dessins annexés dans lesquels :
- la figure 1 est une vue en perspective d'un véhicule automobile avec un médaillon de détail à échelle agrandie ;

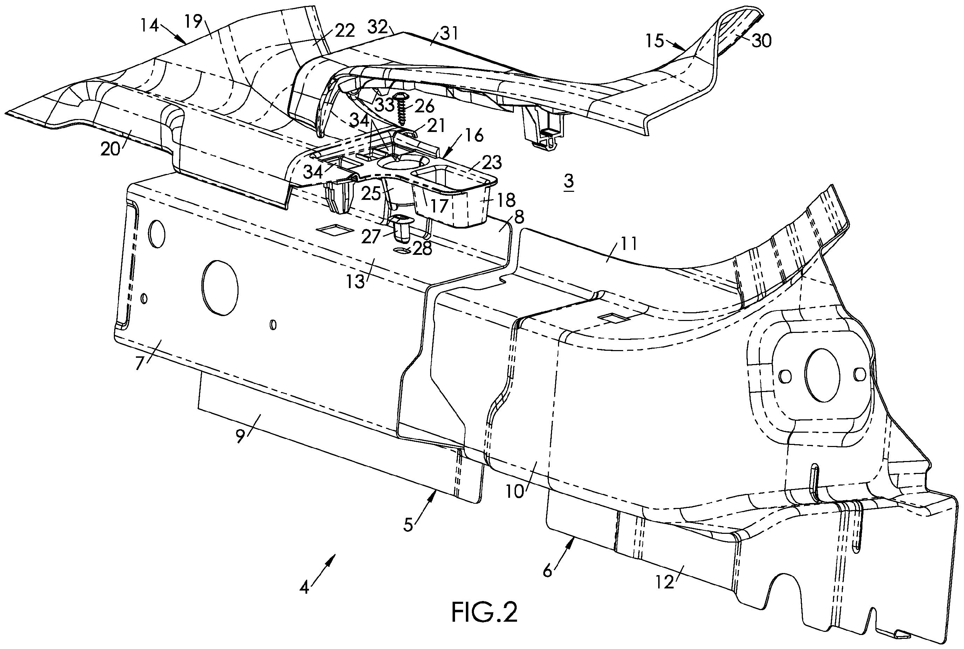

- la figure 2 est une vue en perspective éclatée montrant la composition et la disposition des garnitures sur le longeron, à échelle agrandie ;

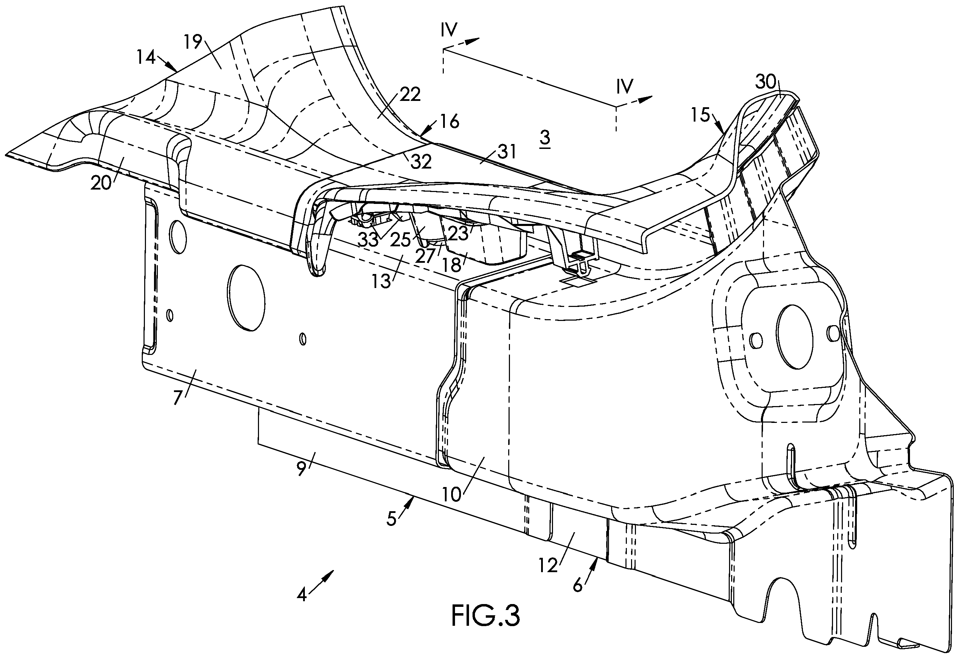

- la figure 3 est une vue en perspective montrant la composition et la disposition des garnitures sur le longeron, à échelle agrandie ;
- la figure 4 est une vue de détail en coupe de la platine, à échelle agrandie, selon un plan de coupe IV-IV.

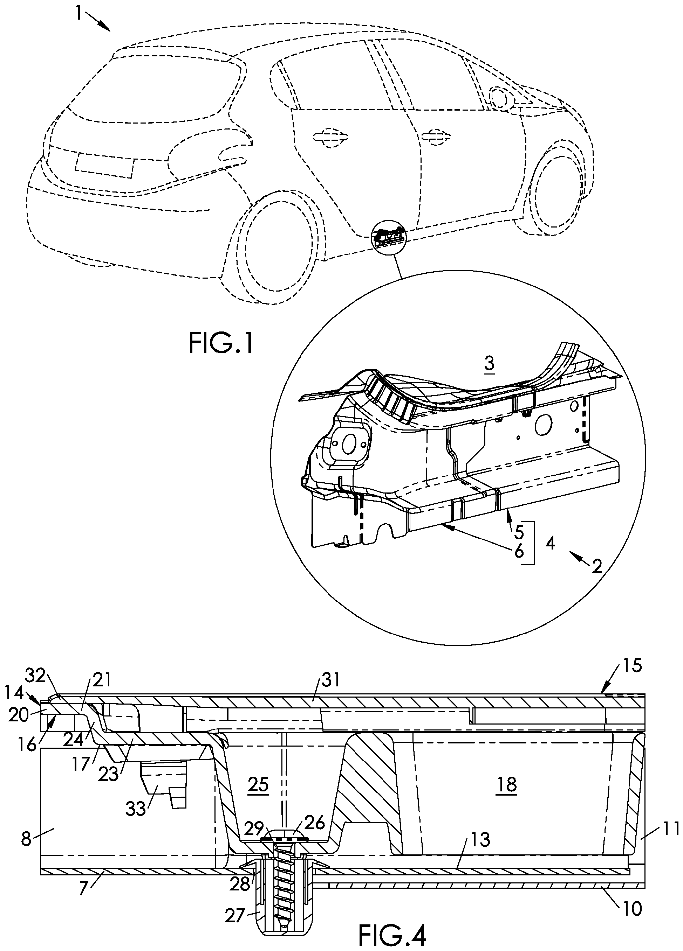

Sur la figure 1 est représenté un véhicule 1 automobile comprenant une caisse 2, ayant dans sa partie arrière, de chaque côté du véhicule 1, une ouverture 3 destinée à accueillir une porte arrière, cette ouverture 3 étant délimitée inférieurement par un longeron 4, latéralement par un pied milieu et un pied arrière positionnés sensiblement au droit du longeron 4, respectivement vers l'avant et l'arrière du véhicule 1, et supérieurement, par un brancard.

Selon l'exemple illustré, chaque longeron 4 comprend un longeron 5 avant et un longeron 6 arrière, le longeron 6 arrière possédant une forme complémentaire au longeron 5 avant de manière à ce qu'il vienne s'insérer au sein de celui-ci, la liaison entre les longerons 5, 6 avant et arrière étant située sensiblement au niveau de l'ouverture 3 de porte arrière.

Le longeron 5 avant comprend une tôle 7 avant interne (tournée vers l'intérieur du véhicule 1) et une tôle avant externe (tournée vers l'extérieur du véhicule 1 et non représentée sur les dessins), assemblées le long de feuillures 8, 9 supérieures et inférieures.

De manière similaire, le longeron 6 arrière comprend une tôle arrière 10 interne et une tôle arrière externe (non représentée sur les dessins), assemblées le long de feuillures 11, 12 supérieures et inférieures.

Le longeron 4 comprend une face 13 supérieure sur laquelle sont notamment fixés les éléments de garniture.

Un joint de porte (non représenté) est positionné sur les feuillures 8, 11 supérieures, des longerons 5, 6 avant et arrière, pour permettre notamment d'insonoriser le véhicule 1 et de garantir une étanchéité au niveau de la porte.

Afin de masquer les différents éléments de carrosserie délimitant l'ouverture 3 de porte arrière, une garniture 14 de pied milieu (partiellement représentée), une garniture 15 de pied arrière (partiellement représentée) et un élément 16 de garniture de seuil de porte sont notamment fixés sur la caisse 2. La garniture 14 de pied milieu recouvre principalement le pied milieu et une partie médiane du longeron 4, la garniture 15 de pied arrière recouvre principalement le pied arrière et une partie arrière du longeron 4, et l'élément 16 de garniture de seuil de porte recouvre une portion du longeron 4 tout en étant positionné à fleur du joint de porte afin d'obtenir un seuil de porte plan.

L'élément 16 de garniture de seuil de porte, destiné à être monté sur le longeron 4, comprend une face 17 inférieure en regard de la face 13 supérieure du longeron 4 et un pion 18 en saillie à partir de cette face 17 inférieure, ce pion 18 formant entretoise entre la face 17 inférieure de l'élément 16 de garniture et la face 13 supérieure du longeron 4. Le pion 18 permet, alors, de rigidifier l'élément 16 de garniture et ainsi de limiter la déformation de l'élément 16 de garniture de seuil de porte lorsqu'il est sollicité.

Selon le mode de réalisation illustré sur les dessins, l'élément 16 de garniture de seuil de porte est intégré à la garniture 14 de pied milieu.

En effet, la garniture 14 de pied milieu (partiellement représentée) comprend un montant 19 et une base 20 sensiblement perpendiculaire au montant 19, formant un T inversé, la base 20 ayant une extrémité avant et une extrémité 21 arrière, opposées au montant 19, respectivement vers l'avant et l'arrière du véhicule 1, l'extrémité arrière 21 de la base 20 étant reliée au montant 19 par l'intermédiaire d'un congé 22 de raccordement.

La garniture 14 de pied milieu comprend également une platine 23 s'étendant dans le prolongement de la base 20 depuis l'extrémité 21 arrière, la platine 23 comprenant la face 17 inférieure depuis laquelle le pion 18 fait saillie.

Ainsi, selon le mode de réalisation illustré, l'élément 16 de garniture de seuil de porte correspond à une portion du congé 22 de raccordement de la garniture 14 de pied milieu, au voisinage de l'extrémité 21 arrière, et à la platine 23 de la garniture 14 de pied milieu, l'élément 16 de garniture de seuil de porte étant recouvert par la garniture 15 de pied arrière.

Tel qu'illustré, le pion 18 peut être un tube par exemple de section rectangulaire. La réalisation du pion 18, sous forme de tube, permet notamment de réduire la masse de l'élément 16 de garniture de seuil de porte.

Selon l'exemple illustré, la garniture 14 de pied milieu comprend un épaulement 24 à la jonction entre la base 20 et la platine 23.

Toujours selon le mode de réalisation illustré sur les figures, la platine 23 comprend un fût 25 s'étendant au voisinage du pion 18, depuis la face 17 inférieure de la platine 23 vers le longeron 4, ce fût 25 étant apte à recevoir un élément 26 de fixation pour solidariser la platine 23 sur le longeron 4, le fût 25 contribuant également à rigidifier l'élément 16 de garniture de seuil de porte.

Plus précisément, comme on peut le voir sur la figure 4, la platine 23 est fixée sur le longeron 4 par l'intermédiaire d'une vis 26 et d'une cheville 27, la cheville 27 étant introduite au sein d'une lumière 28 réalisée dans la tôle 7 avant interne du longeron 5 avant, cette cheville 27 étant apte à recevoir la vis 26 au travers d'un trou 29 réalisé dans la partie inférieure du fût 25. L'introduction de la vis 26 au sein de la cheville 27 entraine une déformation des parois de la cheville 27, cette déformation immobilisant la cheville 27 et par le fait même la platine 23. Cet élément 26 de fixation, proche du pion 18, permet d'éviter tout déplacement parasite de celui-ci lorsque l'élément 16 de garniture de seuil de porte est sollicité.

Selon le mode de réalisation illustré sur les dessins, la garniture 15 de pied arrière (partiellement représentée) comprend un portant 30 et une patte 31 sensiblement perpendiculaire au portant 30 et recouvrant la platine 23 de la garniture 14 de pied milieu, cette patte 31 ayant un bord 32 avant, opposé au portant 30. La patte 31 comprend, en outre, un élément 33 d'encliquetage apte à venir s'encliqueter dans une ouverture 34 de la platine 23 pour permettre la solidarisation de la garniture 14 de pied milieu avec la garniture 15 de pied arrière.

Plus précisément, la patte 31 de la garniture 15 de pied arrière comprend trois griffes 33 au voisinage du bord 32 avant, ces trois griffes 33 venant s'encliqueter dans trois ouvertures 34 réalisées dans la platine 23 entre l'extrémité 21 arrière et le fût 25.

Selon le mode de réalisation illustré sur les figures, l'élément 16 de garniture de seuil de porte est venu de matière avec la garniture 14 de pied milieu.

Selon une variante non représentée, l'élément 16 de garniture de seuil de porte est venu de matière avec la garniture 15 de pied arrière.

Selon un mode de réalisation non représenté, l'élément 16 de garniture de seuil de porte est rapporté sur la garniture 14 de pied milieu ou sur la garniture 15 de pied arrière par exemple par rivetage, vissage, collage, boulonnage ou clipsage.

En variante, l'élément 16 de garniture de seuil de porte pourrait être un élément indépendant, positionné entre la garniture 14 de pied milieu et la garniture 15 de pied arrière.

La présente description concerne un élément 16 de garniture de seuil de porte placé au niveau d'une ouverture 3 de porte arrière, cependant, cet élément 16 de garniture de seuil de porte pourrait être placé au niveau d'une ouverture de porte avant.

L'élément 16 de garniture de seuil de porte qui vient d'être décrit présente un grand nombre d'avantages.

Tout d'abord, le pion 18 permet de rigidifier l'élément 16 de garniture de seuil de porte, celui-ci gardant ainsi sa forme extérieure lorsqu'il sert d'appui à l'utilisateur.

De plus, l'élément 16 de garniture de seuil de porte, notamment lorsque le pion 18 est un tube possède une faible masse, au bénéfice la légèreté du véhicule 1.

Enfin, l'intégration de l'élément 16 de garniture de seuil de porte à la garniture 14 de pied milieu ou à la garniture 15 de pied arrière permet de réduire le temps d'assemblage du véhicule 1 et, par conséquent, le coût de fabrication du véhicule 1. Cela est d'autant plus vrai lorsque l'élément 16 de garniture de seuil de porte est venu de matière avec la garniture 14 de pied milieu ou avec la garniture 15 de pied arrière.

## Revendications

1. Elément (16) de garniture de seuil de porte d'un véhicule (1) automobile destiné à être monté sur un longeron (4) ayant une face supérieure (13), l'élément (16) de garniture comprenant une face (17) inférieure en regard de la face (13) supérieure du longeron (4), et qui comprend un pion (18) en saillie à partir de sa face (17) inférieure, ce pion (18) formant entretoise entre la face (17) inférieure de l'élément (16) de garniture et la face (13) supérieure du longeron (4), ledit élément de garniture (16) étant intégré à une garniture (14) de pied milieu comprenant un montant (19) et une base (20) sensiblement perpendiculaire au montant (19), la base (20) ayant une extrémité (21) arrière opposée au montant (19).

2. Elément (16) de garniture de seuil de porte selon la revendication 1, **caractérisé en ce que** la garniture (14) de pied milieu comprend une platine (23) s'étendant dans le prolongement de la base (20) depuis l'extrémité (21) arrière, cette platine (23) comprenant la face (17) inférieure depuis laquelle le pion (18) fait saillie.

3. Elément (16) de garniture de seuil de porte selon la revendication 2, **caractérisé en ce que** la garniture (14) de pied milieu comprend un épaulement (24) à la jonction entre la base (20) et la platine (23).

4. Elément (16) de garniture de seuil de porte selon les revendications 2 ou 3, **caractérisé en ce que** la platine (23) est recouverte par une garniture (15) de pied arrière.

5. Elément (16) de garniture de seuil de porte selon la revendication 4, **caractérisé en ce que** la platine (23) comprend une ouverture (34), apte à recevoir un élément (33) d'encliquetage solidaire de la garniture (15) de pied arrière, et un fût (25) s'étendant depuis la face (17) inférieure vers le longeron (4), apte à recevoir un élément (26) de fixation pour solidariser la platine (23) sur le longeron (4).

6. Elément (16) de garniture de seuil de porte selon l'une des revendications précédentes, **caractérisé en ce que** le pion (18) est un tube.

7. Elément (16) de garniture de seuil de porte selon la revendication 6, **caractérisé en ce que** le tube est de section sensiblement rectangulaire.

8. Elément (16) de garniture de seuil de porte selon l'une des revendications 1 à 7, **caractérisé en ce que** l'élément (16) de garniture de seuil de porte est venu de matière avec la garniture (14) de pied milieu.

9. Véhicule (1) automobile équipé d'un élément (16) de garniture de seuil de porte selon l'une des revendications précédentes.

## Patentansprüche

1. Verkleidungselement (16) einer Türschwelle eines Kraftfahrzeugs (1), das dazu bestimmt ist, auf einem Längsträger (4) mit einer Oberseite (13) montiert zu sein, wobei das Verkleidungselement (16) eine Unterseite (17) gegenüber der Oberseite (13) des Längsträgers (4) umfasst, und das einen Stift (18) umfasst, der aus seiner Unterseite (17) herausragt, wobei dieser Stift (18) eine Querstrebe zwischen der Unterseite (17) des Verkleidungselements (16) und der Oberseite (13) des Längsträges (4) bildet, wobei das Verkleidungselement (16) in eine Verkleidung (14) einer B-Säule integriert ist, umfassend einen Steher (19) und eine Basis (20) im Wesentlichen senkrecht auf den Steher (19), wobei die Basis (20) ein dem Steher (19) gegenüberliegendes hinteres Ende (21) aufweist.

2. Verkleidungselement (16) einer Türschwelle nach Anspruch 1, **dadurch gekennzeichnet, dass** die Verkleidung (14) der B-Säule eine Platine (23) umfasst, die sich in der Verlängerung der Basis (20) vom hinteren Ende (21) aus erstreckt, wobei diese Platine (23) die Unterseite (17) umfasst, aus der der Stift (18) herausragt.

3. Verkleidungselement (16) einer Türschwelle nach Anspruch 2, **dadurch gekennzeichnet, dass** die Verkleidung (14) der B-Säule einen Absatz (24) an der Verbindung zwischen der Basis (20) und der Platine (23) umfasst.

4. Verkleidungselement (16) einer Türschwelle nach den Ansprüchen 2 oder 3, **dadurch gekennzeichnet, dass** die Platine (23) mit einer Verkleidung (15) der hinteren Säule bedeckt ist.

5. Verkleidungselement (16) einer Türschwelle nach Anspruch 4, **dadurch gekennzeichnet, dass** die Platine (23) eine Öffnung (34), die geeignet ist, ein Einrastelement (33) aufzunehmen, das mit der Verkleidung (15) der hinteren Säule verbunden ist, und einen Schaft (25) umfasst, der sich von der Unterseite (17) zum Längsträger (4) erstreckt und geeignet ist, ein Befestigungselement (26) aufzunehmen, um die Platine (23) mit dem Längsträger (4) zu verbinden.

6. Verkleidungselement (16) einer Türschwelle nach einem der vorhergehenden Ansprüche, **dadurch gekennzeichnet, dass** der Stift (18) ein Rohr ist.

7. Verkleidungselement (16) einer Türschwelle nach Anspruch 6, **dadurch gekennzeichnet, dass** das Rohr im Wesentlichen rechteckigen Querschnitt hat.

8. Verkleidungselement (16) einer Türschwelle nach einem der Ansprüche 1 bis 7, **dadurch gekennzeichnet, dass** das Verkleidungselement (16) der Türschwelle mit der Verkleidung (14) der B-Säule aus einem Stück ist.

9. Kraftfahrzeug (1), das mit einem Verkleidungselement (16) einer Türschwelle nach einem der vorhergehenden Ansprüche ausgestattet ist.

## Claims

1. A garnish element (16) for a door threshold of a motor vehicle (1) intended to be mounted on a side member (4) having an upper face (13), the garnish element (16) including a lower face (17) facing the upper face (13) of the side member (4), and which includes a pin (18) projecting from its lower face (17), this pin (18) forming a spacer between the lower face (17) of the garnish element (16) and the upper face (13) of the side member (4), said garnish element (16) being integrated to a centre pillar garnish (14) including an upright (19) and a base (20) substantially perpendicular to the upright (19), the base (20) having a rear end (21) opposite the upright (19).

2. The garnish element (16) for a door threshold according to Claim 1, **characterized in that** the centre pillar garnish (14) includes a plate (23) extending in the extent of the base (20) from the rear end (21), this plate (23) including the lower face (17) from which the pin (18) projects.

3. The garnish element (16) for a door threshold according to Claim 2, **characterized in that** the centre pillar garnish (14) includes a shoulder (24) at the junction between the base (20) and the plate (23).

4. The garnish element (16) for a door threshold according to Claims 2 or 3, **characterized in that** the plate (23) is covered by a rear pillar garnish (15).

5. The garnish element (16) for a door threshold according to Claim 4, **characterized in that** the plate (23) includes an opening (34), able to receive a catch element (33) integral with the rear pillar garnish (15), and a shaft (25) extending from the lower face (17) towards the side member (4), able to receive a fixing element (26) to secure the plate (23) on the side member (4).

6. The garnish element (16) for a door threshold according to one of the preceding claims, **characterized in that** the pin (18) is a tube.

7. The garnish element (16) for a door threshold according to Claim 6, **characterized in that** the tube is of substantially rectangular cross-section.

8. The garnish element (16) for a door threshold according to one of Claims 1 to 7, **characterized in that** the garnish element (16) for a door threshold is made in one piece with the centre pillar garnish (14).

9. A motor vehicle (1) equipped with a garnish element (16) for a door threshold according to one of the preceding claims.
